# EUROPÄISCHE PATENTSCHRIFT

(11) **EP 2 083 490 B1**
(45) Veröffentlichungstag und Bekanntmachung des Hinweises auf die Patenterteilung: **02.01.2019**
(21) Anmeldenummer: 09000117.3
(22) Anmeldetag: 08.01.2009
(51) Int. Cl.: F16B 37/08

(54) **Unterflurgerätedose für elektrische Installationen**
Floor box for electric installations
Boîte de jonction pour sol pour installations électriques

(30) Priorität: 24.01.2008 DE 102008006915
(43) Veröffentlichungstag der Anmeldung: 29.07.2009
(73) Patentinhaber: OBO Bettermann GmbH & Co. KG, 58710 Menden (DE)
(72) Erfinder: Raschke, Jörg, 51674 Wiehl (DE); Ruhr, Siegfried, 51674 Wiehl (DE)
(74) Vertreter: Patentanwälte Ruff, Wilhelm, Beier, Dauster & Partner mbB

(56) Entgegenhaltungen:
- DE-U1-202006 001 321
- GB-A- 1 402 523
- GB-A- 1 424 528
- GB-A- 2 257 846

## Beschreibung

Die Erfindung betrifft eine Unterflurgerätedose für elektrische Installationen mit einem auf einen Gebäudeboden aufsetzbaren Gehäuseunterteil und einem Gehäuseoberteil, wobei das Gehäuseoberteil mittels wenigstens zwei Gewindestangen gegen das Gehäuseunterteil abgestützt ist, wobei Mittel zur Höhenjustierung des Gehäuseoberteils relativ zum Gehäuseunterteil mittels einer Drehbewegung relativ zum Gehäuseoberteil entlang einem Gewindegang der Gewindestange vorgesehen sind und wobei die Gewindestange in einer Führung aufgenommen ist.

Höhenjustierbare Unterflurgerätedosen werden beispielsweise im Zusammenhang mit estrichbedeckten Böden verwendet. Leitungskanäle und Unterflurgerätedosen werden hierzu auf den rohen Gebäudeboden bzw. auf die rohen Geschossdecken aufgebracht. Vor Ausbringen des Estrichs muss dann die Oberkante der Unterflurgerätedose auf das geplante Estrichniveau gebracht werden. Hierzu werden beispielsweise mittels Gewindestangen arbeitende Höhenverstellungen eingesetzt. Müssen große Höhenunterschiede überwunden werden, ist eine solche Höheneinstellung mühsam, da eine Höheneinstellung ausschließlich durch eine Drehung der Gewindestange erfolgen kann. Da üblicherweise alle vier Ecken einer Unterflurgerätedose mit einer Höhenverstellung versehen sind, kann die exakte Ausrichtung einer Unterflurgerätedose erhebliche Zeit benötigen. Nach erfolgter Höhenjustierung wird der Estrich ausgebracht und die Unterflurgerätedose dadurch bis zu ihrer Oberkante eingebettet. Um im ausgehärteten Estrich Dickenschwankungen sowie Wärmeausdehnungen des Estrichs auch im Bereich der Unterflurgerätedose ohne die Gefahr von Rissen im Estrich zu ermöglichen, ist es bekannt, nach dem Aushärten des Estrichs die Höhenverstellungen von Unterflurgerätedosen zu entkoppeln, so dass keine starre Verbindung mehr zwischen Gehäuseoberteil und Gehäuseunterteil besteht. Hierzu ist es beispielsweise vorgesehen, einen Gewindebolzen am Gehäuseunterteil in einem Klemmschuh zu halten und zur Entkopplung diesen Klemmschuh zu entfernen. Solche bekannten Unterflurgerätedosen werden von der Anmelderin unter der Bezeichnung "UA" und "UAK" vertrieben.

Aus der deutschen Gebrauchsmusterschrift DE 20 2006 001 321 U1 ist eine Unterflurgerätedose mit einem auf einen Gebäudeboden aufsetzbaren Gehäuseunterteil und einem Gehäuseoberteil bekannt, wobei das Gehäuseoberteil mittels wenigstens zwei Gewindestangen gegen das Gehäuseunterteil abgestützt ist, wobei Mittel zur Höhenjustierung des Gehäuseoberteils relativ zum Gehäuseunterteil mittels einer Drehbewegung relativ zum Gehäuseoberteil entlang einem Gewindegang der Gewindestange vorgesehen sind und wobei die Gewindestange in einer Führung aufgenommen ist.

Aus der britischen Offenlegungsschrift GB 2 257 846 A ist eine Unterflurgerätedose bekannt, bei der ein Gehäuseunterteil und ein Gehäuseoberteil relativ zueinander verstellt werden können. Das Gehäuseoberteil weist hierzu rasthakenartige Eingreifelemente auf, die mittels einer Schraubenfeder in Richtung auf eine Seitenwand des Gehäuseunterteils vorgespannt sind.
Aus der britischen Patentschrift GB 1 424 528 ist eine Unterflurgerätedose bekannt, bei der eine Höhenverstellung eines Gehäuseunterteils und eines Gehäuseoberteils mittels Gewindestangen erreicht werden kann, die sich am Gehäuseoberteil abstützen und in eine Gewindebuchse am Gehäuseunterteil eingreifen.
Aus der britischen Patentschrift GB 1 402 523 ist eine weitere Unterflurgerätedose bekannt, bei der eine Höheneinstellung von Gehäuseoberteil und Gehäuseunterteil mittels Einstellschrauben erfolgt, die in eine Gewindebuchse am Gehäuseoberteil eingeschraubt sind und die sich auf einer Abstützfläche am Gehäuseunterteil abstützen.
Mit der Erfindung soll eine Unterflurgerätedose geschaffen werden, die einfach und schnell auf eine gewünschte Höhe eingestellt werden kann.
Erfindungsgemäß ist hierzu eine Unterflurgerätedose mit einem auf einen Gebäudeboden aufsetzbaren Unterteil und einem Gehäuseoberteil vorgesehen, wobei das Gehäuseoberteil mittels wenigstens zwei Gewindestangen gegen das Gehäuseunterteil abgestützt ist und wobei Mittel zur Höhenjustierung des Gehäuseoberteils relativ zum Gehäuseunterteil mittels einer Drehbewegung relativ zum Gehäuseoberteil entlang einem Gewindegang der Gewindestange vorgesehen sind, bei der die Gewindestange in einer Führung aufgenommen ist und im Bereich der Führung ein radial zur Gewindestange verschiebbares Eingreifteil vorgesehen ist, das an seinem, der Gewindestange zugewandten Ende mit einem Innengewinde versehen ist.

Die erfindungsgemäße Unterflurgerätedose kann dadurch nach Ausrücken des Innengewindes des Eingreifteils schnell und durch eine einfache Verschiebebewegung entlang der Gewindestange in der Höhe eingestellt werden. Darüber hinaus ist zusätzlich noch eine Feineinstellung der Höhenlage durch eine Drehbewegung entlang den Gewindegängen der Gewindestange möglich. Auf diese Weise ist die erfindungsgemäße Unterflurgerätedose äußerst anwenderfreundlich, da beispielsweise mittels der Schnellhöhenverstellung eine vorgegebene Höhenlage grob eingestellt werden kann und danach mittels der Feineinstellung eine exakte Justierung vorgenommen werden kann. Die erfindungsgemäße Unterflurgerätedose kann dadurch wesentlich schneller installiert und justiert werden als konventionelle Unterflurgerätedosen. Darüber hinaus lässt sich eine Entkopplung des Gehäuseoberteils vom Gehäuseunterteil durch einfaches Ausrücken des Eingreifteils bewirken. Das Innengewinde am Eingreifteil erstreckt sich beispielsweise maximal über 180°, so dass ein einfaches Ausrücken aus der Gewindestange möglich ist. Alternativ ist eine ovale Innengewindebohrung vorgesehen, die beispielsweise an einem Kunststoffspritzgussteil realisiert ist. Im Rahmen der Erfindung sind unter dem Begriff "Innengewinde" auch ein oder mehrere Eingreifvorsprünge zu verstehen, die in die Gewindegänge der Gewindestange eingreifen können.
In Weiterbildung der Erfindung hat die Gewindestange einen sich drehbar am Gehäuseoberteil abstützenden Kopf, der mit einem Kupplungsteil zum Ansetzen eines Werkzeugs versehen ist.
Auf diese Weise kann eine Feineinstellung der Höhenlage im eingebauten Zustand und von oben her erfolgen.
In Weiterbildung der Erfindung ist das Eingreifteil mit einem Griffelement, insbesondere für eine menschliche Hand, versehen.

Durch Vorsehen eines Griffelements kann das Eingreifteil sicher ergriffen und aus der Gewindestange ausgerückt werden. Das Griffelement kann beispielsweise eine Rändelung am Eingreifteil aufweisen und beispielsweise auch seitlich abragende Greifvorsprünge. Um einem Benutzer verschiedene Möglichkeiten zu geben, das Eingreifteil anzugreifen, kann beispielsweise auch eine Greifvertiefung für einen menschlichen Finger vorgesehen sein.

In Weiterbildung der Erfindung sind Entkopplungsmittel vorgesehen, um das Eingreifteil außer Eingriff mit der Gewindestange zu bringen.

Ein Entkoppeln von Gehäuseoberteil und Gehäuseunterteil erfolgt bei der erfindungsgemäßen Unterflurgerätedose in besonders einfacher Weise durch Ausrücken des Eingreifteils. Eine solche Entkoppelung wird vorteilhafterweise bei trittfestem Estrich vorgenommen, um im Verlauf des nachfolgenden Aushärtens des Estrichs sowie auch später beim Auftreten von Wärme- oder Feuchtigkeitsausdehnungen, eine Rissbildung im Estrich zu vermeiden, da das Gehäuseoberteil nicht mehr starr mit dem Gehäuseunterteil und somit dem Gebäudeboden verbunden ist.

In Weiterbildung der Erfindung ist das Eingreifteil unterhalb einer im Wesentlichen parallel zur Gewindestange verlaufenden Bohrung zum Einsetzen eines Entkopplungsstiftes angeordnet.

Auf diese Weise kann das Eingreifteil mittels eines von der Oberseite der Unterflurgerätedose her eingesetzten Stiftes entkoppelt oder ausgerückt werden. Das Ausrücken kann dabei beispielsweise durch Verkippen des Entkopplungsstiftes nach Art eines Hebels erfolgen oder beispielsweise auch durch Verdrehen des Entkopplungsstiftes, wenn dieser mit einem am Eingreifteil ansetzenden Nocken versehen ist. Wesentlich ist die Möglichkeit, das Eingreifteil durch eine Bedienung von der Oberseite der Unterflurgerätedose her auszurücken und gegebenenfalls das Gehäuseoberteil vom Gehäuseunterteil dauerhaft zu entkoppeln. Auf diese Weise müssen gegebenenfalls vorgesehene Abdeckplatten oder Abdeckfolien, die ein Eindringen von Estrich von oben her in die Unterflurgerätedose verhindern sollen, zum Ausrücken des Eingreifteils nicht abgenommen werden.

In Weiterbildung der Erfindung ist das Eingreifteil mit einer ersten Anlaufschräge versehen, die mit einem Ende des Entkopplungsstiftes zusammenwirken kann.

Das Ausrücken des Eingreifteils kann dadurch durch einfaches Einschieben des Entkopplungsstiftes parallel zur Gewindestange erfolgen. Sobald das Ende des Stiftes auf die erste Anlaufschräge trifft, wird die senkrecht nach unten wirkende Kraft in eine radial zur Gewindestange wirkende Komponente umgesetzt und das Eingreifteil wird ausgelenkt.

In Weiterbildung der Erfindung ist die im Wesentlichen parallel zur Gewindestange verlaufende Bohrung unterhalb des Eingreifteils mit einer zweiten Anlaufschräge versehen.

Sobald das Ende des Stiftes das Eingreifteil durchquert hat, trifft es auf die zweite Anlaufschräge, wodurch der ganze Stift verkippt und das Eingreifteil noch weiter radial von der Gewindestange entfernt wird. Die zweite Anlaufschräge kann entweder alternativ oder zusätzlich zur ersten Anlaufschräge im Eingreifteil vorgesehen sein. Werden die erste und die zweite Anlaufschräge vorgesehen, kann eine große Auslenkung des Eingreifteils bewirkt werden, ohne einen flachen Winkel der Anlaufschrägen vorsehen zu müssen.

In Weiterbildung der Erfindung weist ein Gewinde der Gewindestange wenigstens auf einer Seite einen Flankenwinkel von 0° bis 5° oder weniger als 0° auf.
Ein Flankenwinkel von 0° entspricht dabei einer Ausrichtung der Gewindeflanke senkrecht zu einer Mittellängsachse der Gewindestange. Eine solche Ausrichtung senkrecht zur Gewindestange wird an der Gewindeflanke vorgesehen, die bei einer Belastung des Gehäuseoberteils in Richtung auf das Gehäuseunterteil die Kraft überträgt. Bei einem Flankenwinkel von 0° bis 5° tritt bei Belastung in Längsrichtung der Gewindestange tritt daher keine bzw. lediglich eine sehr geringe radial gerichtete Kraft weg von der Gewindestange am Eingreifteil auf. Bei einem Flankenwinkel von weniger als 0° wird das Eingreifteil im Belastungsfall sogar zur Gewindestange hin gedrängt. Auf diese Weise genügt eine vergleichsweise geringe Vorspannkraft des Eingreifteils gegen die Gewindestange, um einen sicheren Eingriff auch im Belastungsfall aufrechtzuerhalten.
In Weiterbildung der Erfindung ist das Eingreifteil in einer Führung am Gehäuseunterteil angeordnet und mittels einer Schraubenfeder gegen die Gewindestange vorgespannt.
Beispielsweise ist eine Längsführung am Gehäuseunterteil vorgesehen und das Eingreifteil wird durch die Schraubenfeder im eingerückten Zustand an der Gewindestange gehalten. Auf diese Weise muss das Eingreifteil zur Höhenverstellung von der Gewindestange weggezogen werden, sobald das Eingreifteil losgelassen wird, arretiert sich die Höhenverstellung wieder selbsttätig. Eine solche Ausbildung erleichtert die Bedienung der Höhenverstellung erheblich. Beispielsweise ist das Eingreifteil in einer Längsführung aufgenommen und wird linear von der Gewindestange weg bzw. auf diese zu bewegt. Dies kann einen sicheren Eingriff des Innengewindes am Eingreifteil mit dem Außengewinde der Gewindestange sicherstellen.

In Weiterbildung der Erfindung kann das Eingreifteil unverlierbar in der Führung aufgenommen und eine Endposition des Eingreifteils in der Führung kann mittels der auf Block gehenden Schraubenfeder definiert sein.

Durch diese Maßnahmen ist das Eingreifteil nach Montage der Schraubenfeder unverlierbar in der Längsführung aufgenommen. Auch im rauen Baustellenbetrieb besteht dadurch nicht die Gefahr, dass das Eingreifteil aus der Führung heraus fällt und die Höhenverstellung der Unterflurgerätedose dadurch unbrauchbar wird.

In Weiterbildung der Erfindung hat die Gewindestange einen sich drehbar am Gehäuseoberteil abstützenden Kopf, wobei sich der Kopf an einer lösbar am Gehäuseoberteil befestigten Abstützplatte abstützt.

Eine solche Ausbildung erleichtert die Montage der erfindungsgemäßen Unterflurgerätedose erheblich. Die Gewindestange kann vor Einsetzen der Abstützplatte von oben her in das Gehäuseoberteil eingeschoben oder eingedreht werden. Nach Erreichen einer Endposition der Gewindestange wird dann die Abstützplatte aufgesetzt und die Gewindestange kann sich gegen das Gehäuseoberteil abstützen.

In Weiterbildung der Erfindung ist die Abstützplatte mittels eines Bajonettverschlusses befestigt.

Das Vorsehen eines Bajonettverschlusses an der Abstützplatte erleichtert die Montage weiter.

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. In den Zeichnungen zeigen:
- Fig. 1: eine perspektivische Darstellung einer erfindungsgemäßen Unterflurgerätedose,
- Fig. 2: eine abschnittsweise Schnittansicht der Unterflurgerätedose der Fig. 1 im Bereich einer mit einer Höhenverstellung versehenen Ecke,
- Fig. 3: die Höhenverstellung der Fig. 2 in einem Zustand mit eingerücktem Eingreifteil,
- Fig. 4: die Höhenverstellung der Fig. 3 mit ausgerücktem Eingreifteil,
- Fig. 5: eine Darstellung der Unterflurgerätedose der Fig. 1 im teilweisen montierten Zustand im Bereich einer mit der Höhenverstellung versehenen Ecke,
- Fig. 6: eine perspektivische Ansicht des Eingreifteils von schräg unten,
- Fig. 7: eine perspektivische Ansicht eines Eckbauteils des Gehäuseunterteils von schräg unten,
- Fig. 8: eine perspektivische Ansicht des Eingreifteils der Fig. 6 und des Eckbauteils der Fig. 7 im montierten Zustand,
- Fig. 9: eine abschnittsweise Schnittansicht durch eine mit einer Höhenverstellung versehenen Ecke der Unterflurgerätedose der Fig. 1 im eingerückten Zustand des Eingreifteils,
- Fig. 10: die gemäß Fig. 6 geschnittene Unterflurgerätedose von schräg oben,
- Fig. 11: eine abschnittsweise Schnittansicht durch eine mit einer Höhenverstellung versehene Ecke der Unterflurgerätedose der Fig. 1 im ausgerückten Zustand des Eingreifteils und
- Fig. 12: die gemäß Fig. 8 geschnittene Unterflurgerätedose von schräg oben.

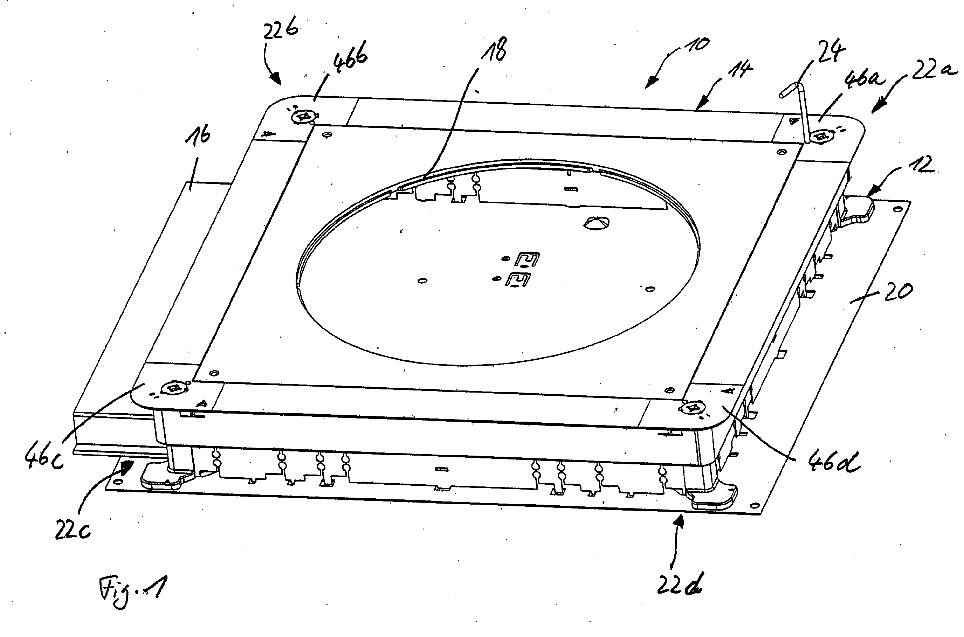

Die Darstellung der Fig. 1 zeigt perspektivisch eine erfindungsgemäße Unterflurgerätedose 10. Die Unterflurgerätedose 10 weist ein Gehäuseunterteil 12 und ein Gehäuseoberteil 14 auf, die höhenverstellbar miteinander verbunden sind, wie noch erläutert werden wird. In die Unterflurgerätedose 10 mündet ein lediglich abschnittsweise angedeuteter Leitungskanal 16. Innerhalb der Unterflurgerätedose 10 kann in einer zentralen Ausnehmung 18 beispielsweise eine aufklappbare Kassette angeordnet werden, in der dann Stromsteckdosen und Datensteckdosen angeordnet werden können.

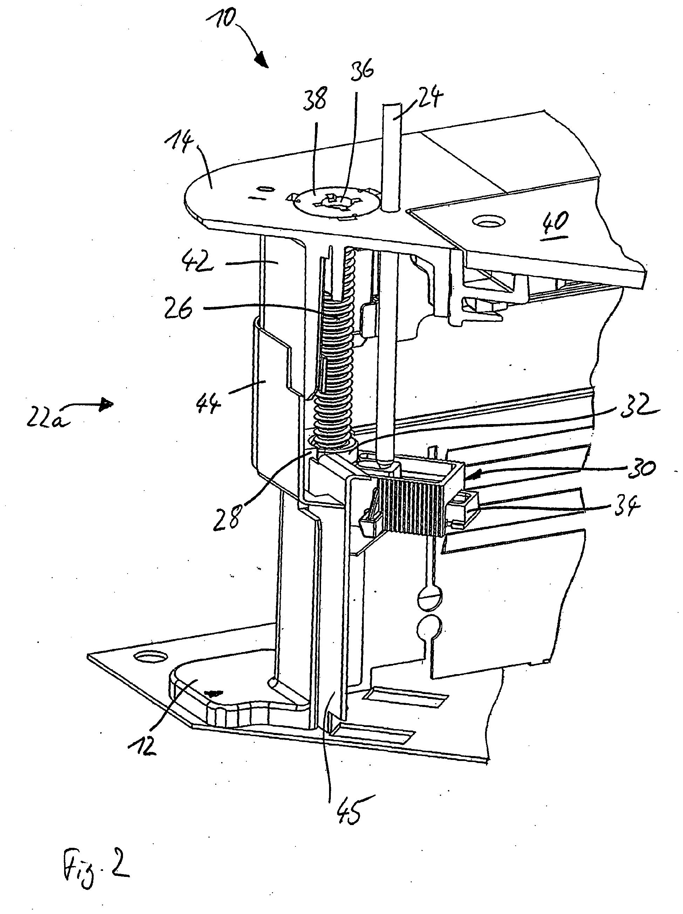

Die Unterflurgerätedose 10 ist zur estrichbündigen Verwendung vorgesehen. Nach dem Aufsetzen einer Grundplatte 20 des Unterteils 12 auf den rohen Gebäudeboden oder eine rohe Geschossdecke, wird das Oberteil 14 mittels der Höhenverstellungen 22a, 22b, 22c und 22d an den vier Ecken der Unterflurgerätedose 10 auf eine vorgesehene Estrichhöhe eingestellt. Daraufhin wird der Estrich ausgebracht, so dass der auf dem Rohboden aufliegende Leitungskanal 16 seitlich und oben und die Unterflurgerätedose 10 bis zu ihrer Oberkante von Estrich umgeben sind. Gewebestücke oder dergleichen können am Umfang der Unterflurgerätedose 10 vorgesehen sein, um ein Eindringen von Estrich in den Innenraum der Unterflurgerätedose 10 zu verhindern.
Nach dem Aushärten des Estrichs kann es gewünscht sein, eine Verbindung zwischen dem Gehäuseoberteil und dem Gehäuseunterteil 12 zu lösen, so dass keine starre Verbindung mehr existiert. Beim endgültigen Aushärten des Estrichs sowie bei Wärmeausdehnungen oder durch Feuchtigkeit verursachte Ausdehnungen des Estrichs kann das Gehäuseoberteil 14 dann in gewissem Maß relativ zum Gehäuseunterteil 12 bewegt werden und die Entstehung von Rissen im Estrich wird vermieden.
In der Darstellung der Fig. 1 ist im Bereich der Höhenverstellung 22a ein Entkopplungsstift 24 zu erkennen, der in eine Bohrung im Gehäuseoberteil 14 eingesteckt wird, um eine Entkopplung der Höhenverstellung zu bewirken. Gleichartige Entkopplungsstifte 24 können auch in die entsprechenden Bohrungen im Bereich der Höhenverstellungen 22b, 22c und 22d eingeschoben werden, um auch diese Höhenverstellungen dauerhaft zu entkoppeln.
Die Darstellung der Fig. 2 zeigt eine abschnittsweise Schnittansicht der Unterflurgerätedose 10 der Fig. 1 im Bereich der Höhenverstellung 22a. Die Höhenverstellung 22a weist eine Gewindestange 26 auf, die drehbar im Gehäuseoberteil 14 gelagert ist. Die Gewindestange 26 erstreckt sich bis in eine Führung 28 des Gehäuseunterteils 12 hinein und im Bereich dieser Führung ist ein Eingreifteil 30 vorgesehen, das an seinem, der Gewindestange 26 zugewandten Ende, eine Rinne 32 aufweist, die mit einem zur Gewindestange 26 passenden Innengewinde versehen ist.
Die Rinne 32 und das sich in dieser befindliche Innengewinde erstrecken sich über einen Winkelbereich von 180°, so dass das Innengewinde in der Rinne 32 in Eingriff und außer Eingriff mit der Gewindestange 26 gebracht werden kann. Das Eingreifteil 30 ist radial zur Gewindestange 26 verschiebbar angeordnet und auf einer Längsführung 34 angeordnet. Das Eingreifteil 30 kann somit von der Gewindestange 26 weg und wieder auf diese zu bewegt werden.

In dem in Fig. 2 dargestellten Zustand greift das Innengewinde in der Rinne 32 in das Außengewinde der Gewindestange 26 ein. Das Eingreifteil 30 ist somit gegen eine Verschiebung parallel zur Gewindestange 26 blockiert. Da das Eingreifteil 30 wiederum auf der Längsführung 34 angeordnet ist und durch diese Längsführung 34 gegen eine Verschiebung parallel zur Gewindestange 26 blockiert ist, ist auch das Gehäuseunterteil 12 gegen eine Verschiebung parallel zur Gewindestange 26 blockiert. Umgekehrt kann dadurch selbstverständlich auch die Gewindestange 26 nicht mehr linear in der Führung 28 verschoben werden und somit ist die Position des Gehäuseoberteils 14 relativ zum Gehäuseunterteil 12 in der in Fig. 2 dargestellten Position des Eingreifteils 30 festgelegt. Eine Veränderung der Position des Gehäuseoberteils 14 relativ zum Gehäuseunterteil 12 kann in der in Fig. 2 dargestellten eingerückten Position des Eingreifteils 30 nur durch eine Drehung der Gewindestange 26 relativ zum Gehäuseoberteil 14 und damit auch relativ zum Eingreifteil 30 erfolgen. Wie in Fig. 2 zu erkennen ist, kann durch eine Drehung der Gewindestange 26 ein Abstand zwischen Gehäuseoberteil 14 und Gehäuseunterteil 12 vergrößert oder verringert werden.

Bei der erfindungsgemäßen Unterflurgerätedose 10 ist an der Höhenverstellung 22a somit eine Schnellverstellung realisiert, bei der nach Bewegen des Eingreifteils 30 radial von der Gewindestange 26 weg in eine ausgerückte Position die Gewindestange 26 in der Führung 28 des Gehäuseunterteils 12 linear verschoben werden kann. Dadurch kann eine Höhenposition des Gehäuseoberteils 14 schnell verstellt werden. Darüber hinaus ist an der Höhenverstellung 22a eine Feineinstellung realisiert. Hierzu wird die Gewindestange 26 in der eingerückten Position des Eingreifteils 30, wie sie in Fig. 2 dargestellt ist, beispielsweise mittels eines Schraubendrehers gedreht, der in die zentrale Öffnung 36 einer Abdeckkappe 38 am Gehäuseoberteil 14 eingeführt und dann gedreht wird. Um die Gewindestange 26 drehen zu können, ist in ihrem Kopf 58 ein Kreuzschlitz, vorgesehen. Durch die dann erfolgende Drehbewegung der Gewindestange 26 kann das Gehäuseoberteil 14 in seiner Höheneinstellung justiert werden.

Sowohl die Feineinstellung durch Drehung der Gewindestange 26 als auch die Schnellverstellung nach Ausrücken des Eingreifteils 30 können dabei von der Oberseite des Gehäuseoberteils 14 her erfolgen. Nach Einschieben des Entkoppelstiftes 24 greift dieser an einer Anlaufschräge am Eingreifteil 30 an und verschiebt dieses dadurch in die ausgerückte Position, wie noch erläutert werden wird. Dadurch ist eine Verschiebung der Gewindestange 26 linear in der Führung 28 möglich. Wie bereits erläutert wurde, kann die Gewindestange 26 mittels eines Schraubendrehers von der Oberseite des Gehäuseoberteils 14 gedreht werden. Das Eingreifteil 30 kann darüber hinaus aber auch von Hand verschoben werden, wenn eine Abdeckplatte 40 am Gehäuseoberteil 14 entfernt ist.

Anhand der Darstellung der Fig. 2 ist weiter zu erkennen, dass das Gehäuseoberteil 14 mit einer in Richtung des Gehäuseunterteils 12 abragenden Schürze 42 versehen ist. Weiterhin ist das Oberteil 14 mit einem in Höhenrichtung verschiebbar aber unverlierbar am Oberteil 14 befestigten Fallblech 44 versehen, das in Richtung des Gehäuseunterteils 12 abragt und einen das Oberteil 14 umlaufenden Rahmen bildet. Die Schürze 42 des Gehäuseoberteils 14 ist dabei in Bezug auf einen Innenraum der Unterflurgerätedose 10 innerhalb des Fallblechs 44 angeordnet. Die Schürze 42 und das Fallblech 44 sorgen im Verbund mit einem Schottblech 45 am Unterteil 12 für eine Abdichtung des Innenraums der Unterflurgerätedose 10 gegen eindringenden Estrich.

Die Unterflurgerätedose 10 weist insgesamt vier Eckteile 46a, 46b, 46c und 46d auf, die jeweils mit einer Höhenverstellung 22a, 22b, 22c und 22d versehen sind und aus Aludruckguss, Zinkdruckguss oder Kunststoffspritzguss bestehen. Zwischen diesen. Eckteilen 46a, 46b, 46c und 46d sind Metallleisten oder Bleche angeordnet, um die Zwischenräume zu überbrücken und die insgesamt etwa quadratische Form der Unterflurgerätedose 10 bereitzustellen. Diese Metallleisten oder Bleche bilden ebenfalls aneinander anliegende Schürzen aus, um ein Eindringen von Estrich in den Innenraum zu verhindern und sind darüber hinaus teilweise mit Sollbruchstellen zum Einbringen von für Leitungskanäle 16 passenden Durchgangsöffnungen versehen.

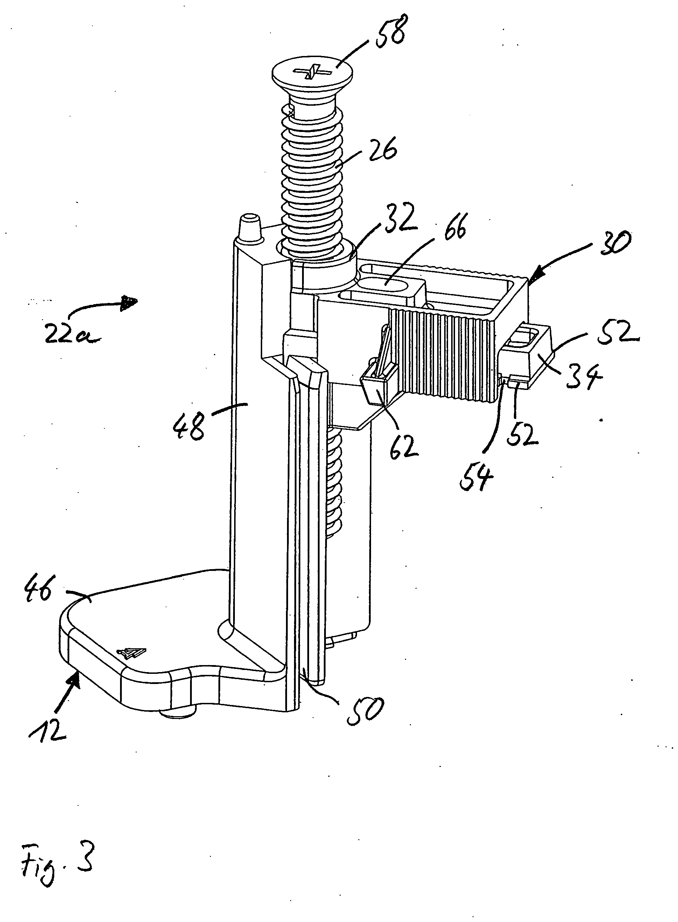

Die Darstellung der Fig. 3 zeigt die Höhenverstellung 22a der Fig. 2 bei abgenommenem Gehäuseoberteil. Gut zu erkennen ist, dass das Gehäuseunterteil 12 im Bereich dieser Ecke einen Bodenflansch 46 aufweist, der, siehe Fig. 1, im montierten Zustand auf der Bodenplatte aufsitzt. Ausgehend von dem Bodenflansch 46 erstreckt sich ein Hauptkörper 48 parallel zur Gewindestange 26 nach oben. An diesem Hauptkörper 48 sind zum einen Schlitze 50 zum Einführen von Blechen vorgesehen. Zum anderen ist in diesem Hauptkörper 48 auch eine Durchgangsbohrung realisiert, die als Führung für die Gewindestange 26 dient. Im oberen Bereich ist diese Durchgangsbohrung lediglich über einen Winkelbereich von etwa 180° vom Hauptkörper umgeben. Dies ist der Bereich, gegenüber dem die Rinne 32 des Eingreifteils 30 liegt, wenn sich das Eingreifteil 30, wie in Fig. 3 dargestellt, im eingerückten Zustand befindet. Angrenzend an diesen oberen Bereich des Hauptkörpers 48 schließt sich dieser um die Durchgangsbohrung herum und stellt dadurch eine die Gewindestange 26 umgebende Führung bereit.

Der Hauptkörper 48 weist darüber hinaus die Längsführung 34 auf, die senkrecht und radial zur Durchgangsbohrung und zur Gewindestange 26 abragt. Auf dieser Längsführung 34 ist das Eingreifteil 30 verschiebbar angeordnet. Wie bereits erläutert wurde, kann das Eingreifteil 30 in radialer Richtung von der Gewindestange 26 weg und auf diese zu bewegt werden, eine Bewegung parallel zur Gewindestange 26 ist aber blockiert. Die Längsführung 34 weist hierzu an beiden Seiten Führungsleisten 52 auf, die sich seitlich von der Längsführung 34 weg erstrecken. Diese Führungsleisten 52 werden von Führungsvorsprüngen des Eingreifteils 30 umgriffen, so dass eine Bewegung parallel zur Gewindestange 26 in beiden Richtung blockiert ist. Die Führungsleisten 52 weisen Unterbrechungen auf. Werden die Führungsvorsprünge des Eingreifteils 30 unterhalb dieser Unterbrechungen angeordnet, so kann das Eingreifteil 30 senkrecht zur Längsführung 34 verkippt oder verschoben werden und dadurch von der Längsführung 34 freikommen.

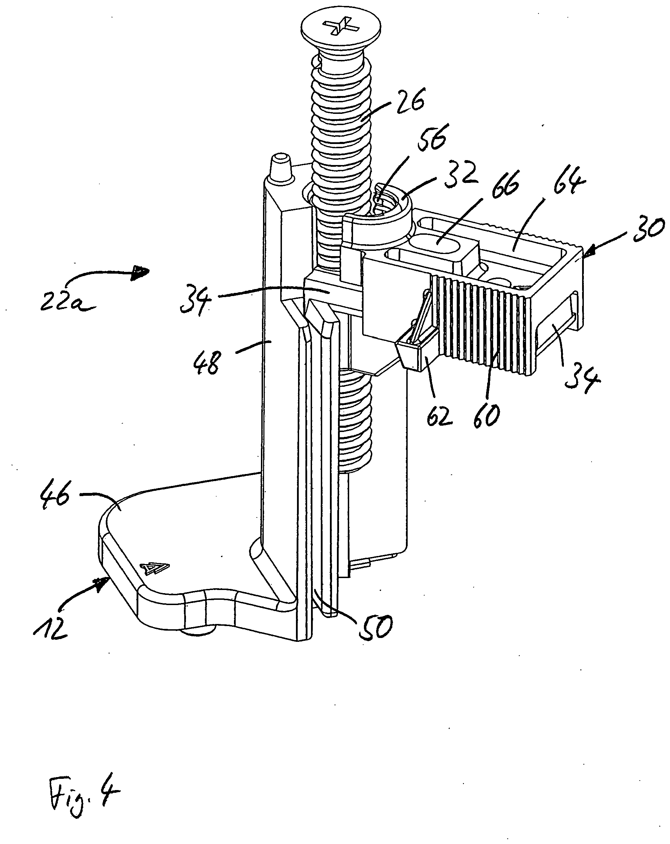

Die Darstellung der Fig. 4 zeigt eine der Fig. 3 vergleichbare Ansicht, wobei sich das Eingreifteil 30 aber im ausgerückten Zustand befindet. Zu erkennen ist das am Innenumfang der Rinne 32 angeordnet Innengewinde 56, das passend zum Gewinde der Gewindestange 26 ausgebildet ist. Wie bereits erläutert wurde, kann in dem in Fig. 4 dargestellten ausgerückten Zustand des Eingreifteils 30 die Gewindestange 26 linear innerhalb der Führung im Gehäuseunterteil 12 verschoben werden. In dem in Fig. 3 dargestellten eingerückten Zustand des Eingreifteils kann eine Höhenverstellung lediglich durch eine Drehung der Gewindestange 26 erfolgen.

Das Eingreifteil 30 ist mit mehreren Griffelementen versehen, um dieses leicht und ohne Verwendung von Werkzeug von der eingerückten Position in Fig. 3 in die ausgerückte Position in Fig. 4 zu bringen. Als Griffelemente sind eine Rändelung 60 an gegenüberliegenden Seiten des Eingreifteils 30 vorgesehen sowie an beiden Seiten des Eingreifteils 30 abragende Greifvorsprünge 62. Darüber hinaus ist das Eingreifteil 30 an seiner Oberseite mit einer Greifvertiefung 64 versehen, in die beispielsweise ein Haken oder ein menschlicher Finger eingesetzt werden kann, um das Eingreifteil 30 leicht zu verschieben. Die Öffnung 66 im Eingreifteil 30 dient zum Einführen des Entkopplungsstiftes 24 und wird in ihrer Ausgestaltung noch erläutert.

Das Eingreifteil 30 ist mittels einer in den Fig. 3 und 4 nicht erkennbaren Schraubenfeder in die eingerückte Position der Fig. 3 vorgespannt. Um das Eingreifteil 30 in die ausgerückte Position zu bringen, kann ein Bediener beispielsweise seinen Daumen auf die in der Fig. 3 freiliegende Endfläche der Längsführung 34 legen, die von der Gewindestange 26 aus gesehen dann hinter dem Ende des Eingreifteils 30 liegt. Zeigefinger und Mittelfinger werden jeweils auf einen der Greifvorsprünge 62 gelegt und auf diese Weise kann das Eingreifteil 30 leicht zurückgezogen werden.

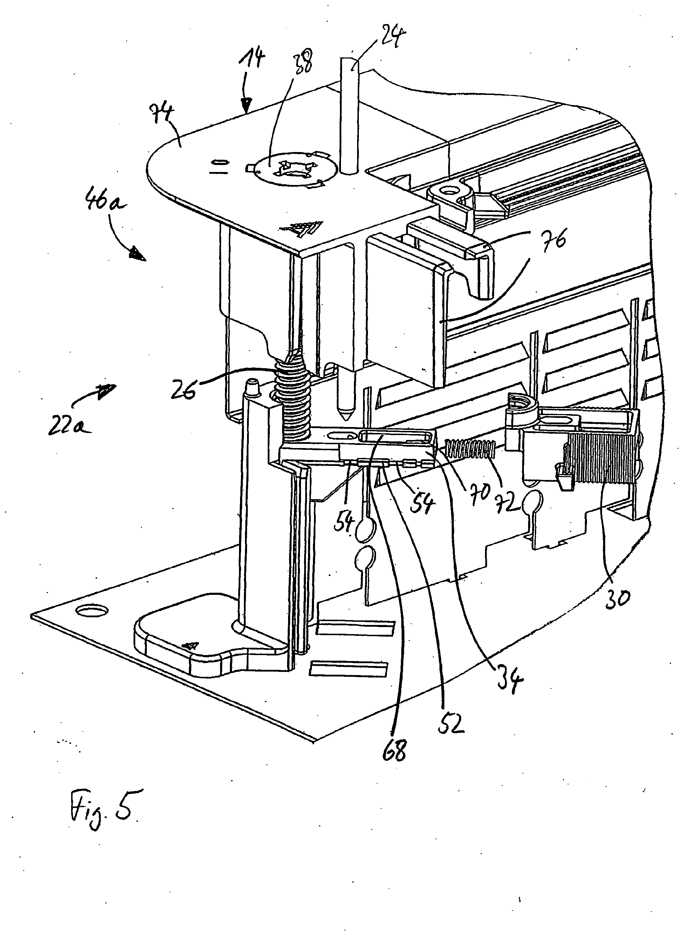

Die Darstellung der Fig. 5 zeigt das Eckbauteil 46a der Unterflurgerätedose 10 mit der Höhenverstellung 22a in einem teilweise montierten Zustand. Speziell ist das Eingreifteil 30 noch nicht auf die Längsführung 34 aufgesetzt und die in der Darstellung der Fig. 5 vordere Führungsleiste 52 mit den Unterbrechungen 54 ist gut zu erkennen.

Die Längsführung 34 ist mit einem Langloch 68 versehen, und an von der Gewindestange 26 weiter entfernten Ende des Langlochs 68 ragt ein Dorn 70 in das Langloch vor. Dieser Dorn 70 ist zum Aufschieben einer Spiralfeder 72 vorgesehen, die sich dann mit ihrem gegenüberliegenden Ende am Eingreifteil 30 abstützt und dieses dadurch in Richtung der Gewindestange 26 vorspannt.

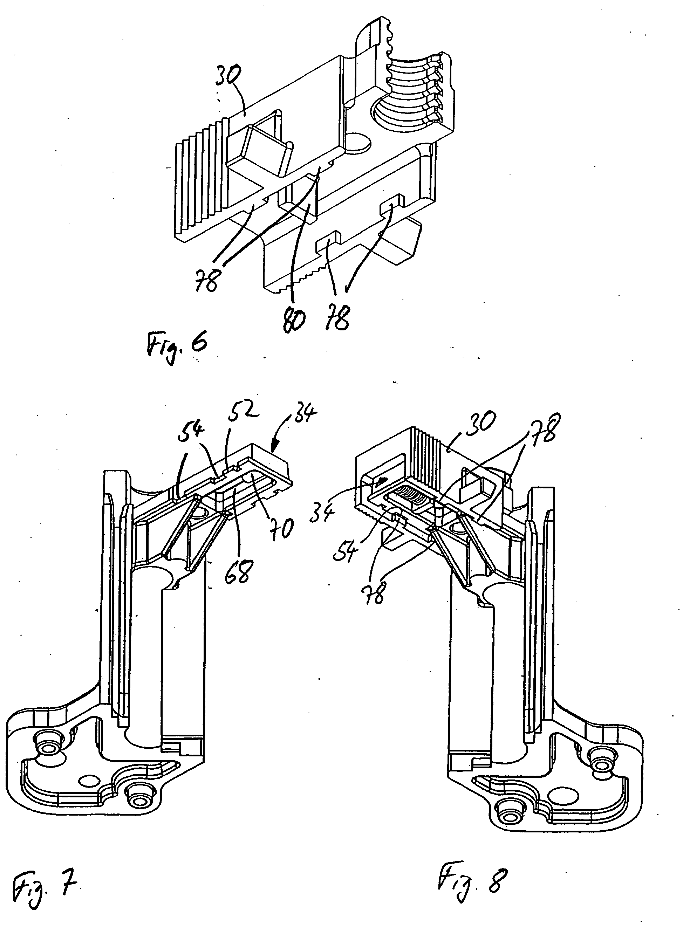

Zum Montieren des Eingreifteils 30 wird dieses von oben auf die Längsführung 34 aufgesetzt. Die Führungsvorsprünge am Eingreifteil 30 können dann durch die Unterbrechungen 54 hindurchgleiten, bis sie in der Darstellung der Fig. 5 unterhalb der Führungsleiste 52 angeordnet sind. Nach dem Montieren der Spiralfeder 72 ist das Eingreifteil 30 dann gegen die Gewindestange 26 vorgespannt. Zum Entnehmen des Eingreifteils 30 muss dieses dann wieder so weit gegen die Kraft der Spiralfeder 72 von der Gewindestange 26 weggezogen werden, bis die Führungsvorsprünge am Eingreifteil 30, die in Figur 6 und Figur 8 zu erkennen sind, wieder unterhalb der Unterbrechungen 54 angeordnet sind. In dieser Position kann das Eingreifteil 30 in der Darstellung der Figur 5 dann nach oben von der Längsführung 34 abgenommen werden.

Auf diese Weise stehen bei der erfindungsgemäßen Unterflurgerätedose drei Möglichkeiten zur Verfügung, eine sogenannte Entkopplung vorzunehmen. Zum einen kann der Entkopplungsstift 24 eingesteckt werden, bis das Eingreifteil 30 mit seinem Innengewinde aus der Gewindestange 26 ausgerückt ist. Zum anderen kann das Eingreifteil 30, wie soeben beschrieben, entfernt werden. Schließlich kann auch die Gewindestange 26 entfernt werden. Im eingebauten und von Estrich an den Seiten umschlossenen Zustand der Unterflurgerätedose 10 wird dies dadurch bewirkt, dass die Abstützplatte 38 vom Oberteil 14 abgenommen wird. Der Kopf der Gewindestange 26 ist dann zugänglich und die Gewindestange 26 kann herausgedreht werden. Um die Gewindestange 26 schneller entnehmen zu können, kann auch die Abdeckplatte 38 entfernt und gleichzeitig der Entkopplungsstift 24 eingeschoben werden. Die Gewindestange 26 kann dann einfach herausgezogen werden, da ja das Innengewinde des Eingreifteils 30 nicht mehr eingreift.

Alternativ kann das Eingreifteil 30 unverlierbar in der Längsführung 34 gehalten sein, da die Spiralfeder 42 beispielsweise auf Block gehen kann und eine weitere Verschiebung des Eingreifteils 30 von der Gewindestange 26 weg verhindern kann, bevor die Führungsvorsprünge des Eingreifteils 30 wieder unterhalb der Unterbrechungen 54 der Führungsleisten 52 angeordnet sind.

Gut zu erkennen ist in Fig. 5 die Ausbildung des Gehäuseoberteils im Bereich der Ecke 46a. Ein Eckbauteil 74 des Gehäuseoberteils 14 ist mit Vorsprüngen 76 versehen, auf die Profilleisten aufgeschoben werden können, die sich dann bis zum gegenüberliegenden Eckstück erstrecken.
Die Ausbildung des Eingreifteils 30 sowie des Gehäuseunterteils ist auch gut den Darstellungen der Fig. 6, 7 und 8 zu entnehmen. Fig. 6 zeigt das Eingreifteil 30 von schräg unten und die Führungsvorsprünge 78 sind gut zu erkennen, die im gleichen Abstand und passend zu den Unterbrechungen 54 der Führungsleisten 52 ausgebildet und angeordnet sind. In der Darstellung der Figur 8 sind die Führungsvorsprünge 78 genau unterhalb der Unterbrechungen 54 angeordnet und das Eingreifteil 30 könnte von der Längsführung 34 abgenommen werden.

Die Spiralfeder 72 greift an ihrem, dem Dorn 70 gegenüberliegenden Ende an einem Anschlagvorsprung 80 an, der sich auf der Unterseite des Eingreifteils in das Langloch 68 hinein erstreckt.

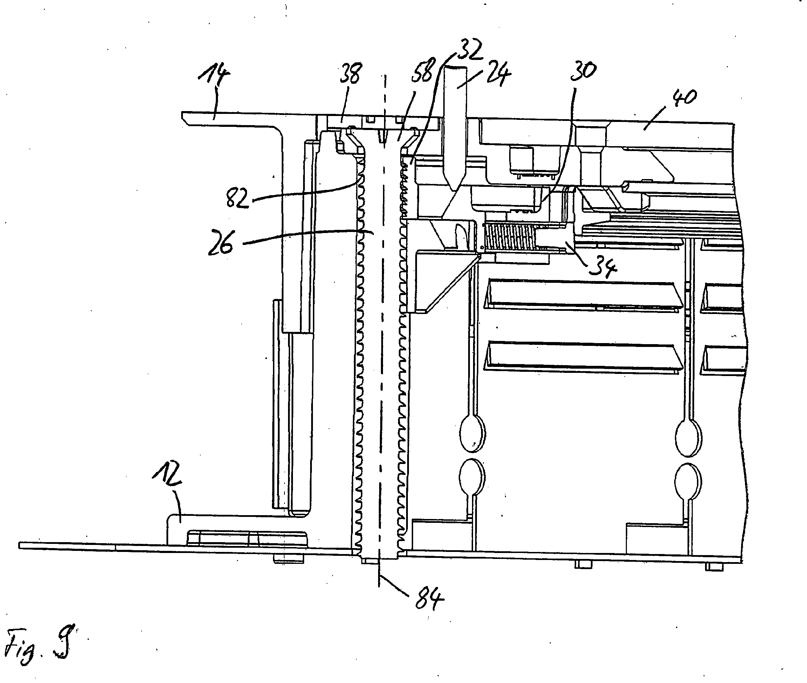

In der Schnittansicht der Fig. 9 ist zu erkennen, wie sich der Kopf 58 der Gewindestange 26 an der Abstützplatte 38 im Gehäuseoberteil 14 abstützt. Die Abstützplatte 38 ist mittels eines Bajonettverschlusses in die Deckplatte des Gehäuseoberteils 14 eingesetzt. Um die Gewindestange 26 zu montieren, wird diese bei abgenommener Abstützplatte 38 in die Führung am Gehäuseunterteil 12 eingeschoben oder eingedreht, je nachdem, ob sich das Eingreifteil 30 im eingerückten oder ausgerückten Zustand befindet. Nachdem die Gewindestange 26 sich in der in Fig. 9 dargestellten Position befindet, wird die Abstützplatte 38 aufgesetzt und durch Drehen arretiert. In dem in Fig. 9 dargestellten Zustand kann sich der Kopf 58 somit gegen die Abstützplatte 38 abstützen und dadurch das Gehäuseoberteil 14 in der eingestellten Höhenposition halten. Wird beispielsweise die Abdeckplatte 40 des Gehäuseoberteils 14 belastet, so wird diese Kraft über die Abstützplatte 38 und den Kopf 58 auf die Gewindestange 26 übertragen. Die Kraft wird dann über die jeweils unten liegenden Gewindeflanken 82 der Gewindestange 26 auf die jeweils oben liegenden Gewindeflanken des Innengewindes in der Rinne 32 am Eingreifteil 30 übertragen. Das Eingreifteil 30 wird dadurch nach unten gedrückt, da sich dieses aber an der Längsführung 34 und somit am Gehäuseunterteil 12 abstützt, wird das Gehäuseoberteil 14 in seiner Lage gehalten.

Anhand der Darstellung der Fig. 9 ist die spezielle Ausbildung des Gewindes der Gewindestange 26 zu erkennen. Die jeweils unten liegenden Gewindeflanken 82 sind in einem Winkel von 3° zu einer Mittellängsachse 84 der Gewindestange 26 angeordnet. Bei zur Mittellängsachse 84 senkrechten Ausrichtung spricht man von einem Winkel von 0° der Gewindeflanken. Die gegenüberliegende Gewindeflanke schließt dahingegen mit der Mittellängsachse 84 einen Winkel von weniger als 90° ein. In diesem Fall spricht man von einem Winkel von mehr als 0°. Die Gewindeflanke des Innengewindes in der Rinne 32, die mit den Gewindeflanken 82 angreifen, sind parallel zu diesen Gewindeflanken 82 und somit ebenfalls in einem Winkel von 3° zur Mittellängsachse 84 der Gewindestange 26 ausgerichtet. Wird auf die Gewindestange 26 somit eine in der Darstellung der Fig. 9 nach unten gerichtete Kraft ausgeübt, so liegen die Abstützflächen, nämlich die Gewindeflanken 82 und die gegenüberliegenden Gewindeflanken des Innengewindes annähernd senkrecht zu dieser Kraft und aufgrund dessen kann keine nennenswerte Kraft entstehen, die das Eingreifteil 30 radial von der Gewindestange 26 wegdrücken würde.

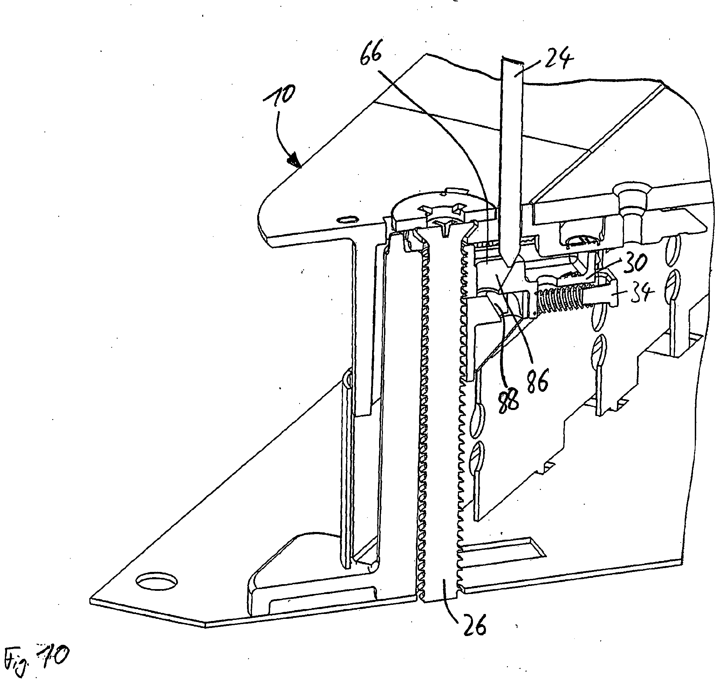

In der Darstellung der Fig. 10 ist die gemäß Fig. 9 geschnittene Unterflurgerätedose 10 von schräg oben dargestellt. In dieser Ansicht ist eine Anlaufschräge 86 im Eingreifteil 30 unterhalb der Öffnung 66 zum Einführen des Entkopplungsstiftes 24 zu erkennen. Diese Anlaufschräge 86 läuft auf die Gewindestange 26 zu und dann, wenn der Entkopplungsstift 24 ausgehend von der in Fig. 10 dargestellten Lage nach unten gedrückt wird, wird die von der Spitze des Entkopplungsstiftes 24 ausgeübte Kraft in eine senkrecht zur Gewindestange 26 wirkende Kraft umgesetzt, die dann das Eingreifteil 30 radial von der Gewindestange 26 wegdrückt.

Unterhalb der Öffnung 66 mit der Anlaufschräge 86 ist eine weitere Durchgangsbohrung mit einer zweiten Anlaufschräge 88 in der Längsführung 34 vorgesehen und kann bei entsprechender Anordnung dazu verwendet werden, das Eingreifteil, 30 noch weiter von der Gewindestange 26 wegzubewegen. Diese zweite Anlaufschräge 88 ist von der Gewindestange 26 weg gerichtet und wenn die Spitze des Entkopplungsstiftes 24 auf die zweite Anlaufschräge 88 auftrifft, wird der Entkopplungsstift 24 verkippt und drückt dadurch das Eingreifteil 30 noch weiter von der Gewindestange 26 weg. Sobald sich der Entkopplungsstift 24 damit vollständig durch das Eingreifteil 30 und die Längsführung 34 hindurch erstreckt, ist das Eingreifteil 30 aber auch ohne die beschriebene Wirkung der zweiten Anlaufschräge 88 sicher aus dem Gewinde der Gewindestange 26 ausgerückt.

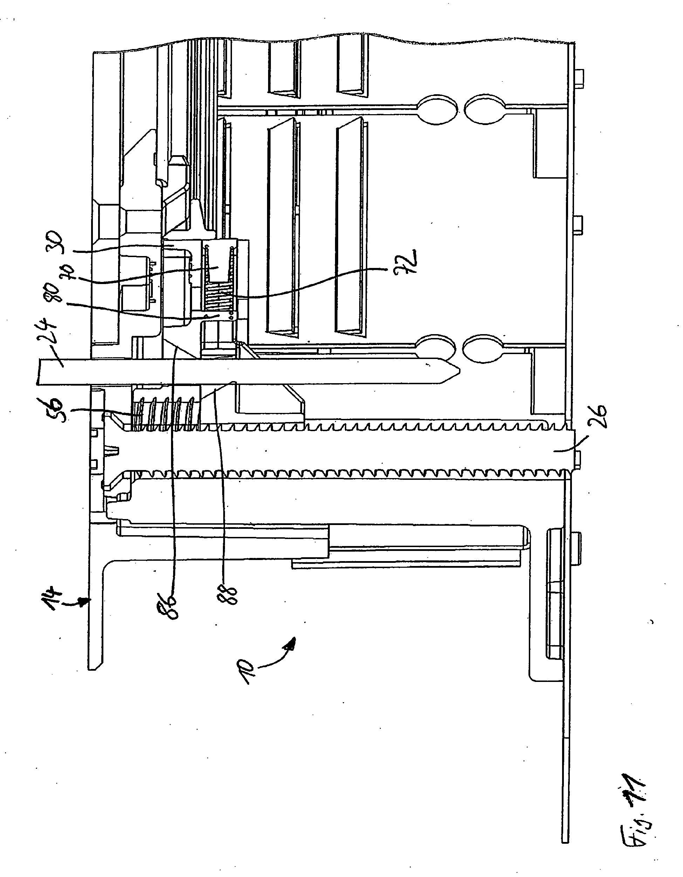

Diesen ausgerückten Zustand des Eingreifteils 30 bei vollständig eingeschobenen Entkopplungsstift 24 zeigt die Schnittansicht der Fig. 11. Zu erkennen ist, dass das Innengewinde 56 am Eingreifteil 30 vollständig aus dem Gewinde der Gewindestange 26 ausgerückt ist und das Gehäuseoberteil 14 dadurch in Höhenrichtung frei beweglich ist. Die zweite Anlaufschräge ist aber so angeordnet, dass auch der vollständig durchgeschobene Entkopplungsstift 24 noch parallel zur Gewindestange 26 liegt. Die zweite Anlaufschräge dient bei der gezeigten Ausführungsform also lediglich dazu, den Entkopplungsstift 24 beim Einschieben zu führen.

Es ist weiter zu erkennen, dass ausgehend von der in Fig. 11 dargestellten Position des Eingreifteils 30 dieses zwar noch weiter von der Gewindestange 26 wegbewegt werden könnte, eine Bewegung des Eingreifteils 30 von der Gewindestange 26 weg wird aber letztendlich dadurch blockiert, dass entweder der Vorsprung 80 an dem der Gewindestange 26 zugewandten Ende des Dorns 70 anschlägt oder die Spiralfeder 72 vorher auf Block geht.

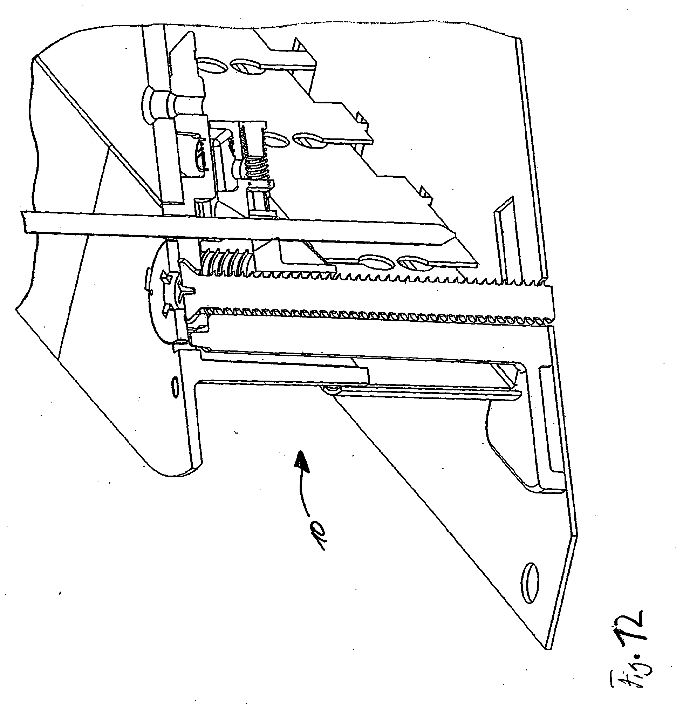

Fig. 12 zeigt die gemäß Fig. 11 geschnittene Unterflurgerätedose 10 von schräg oben.

## Patentansprüche

1. Unterflurgerätedose für elektrische Installationen mit einem auf einen Gebäudeboden aufsetzbaren Gehäuseunterteil und einem Gehäuseoberteil, wobei das Gehäuseoberteil mittels wenigstens zwei Gewindestangen gegen das Gehäuseunterteil abgestützt ist und wobei Mittel zur Höhenjustierung des Gehäuseoberteils relativ zum Gehäuseunterteil mittels einer Drehbewegung relativ zum Gehäuseoberteil entlang einem Gewindegang der Gewindestange vorgesehen sind und wobei die Gewindestange (26) in einer Führung aufgenommen ist, **dadurch gekennzeichnet, dass** im Bereich der Führung ein radial zur Gewindestange (26) verschiebbares Eingreifteil (30) vorgesehen ist, das an seinem, der Gewindestange (26) zugewandten Ende mit einem Innengewinde (56) versehen ist.

2. Unterflurgerätedose nach Anspruch 1, **dadurch gekennzeichnet, dass** die Gewindestange (26) einen sich drehbar am Gehäuseoberteil (14) abstützenden Kopf (58) hat, der mit einem Kupplungsteil zum Ansetzen eines Werkzeugs versehen ist.

3. Unterflurgerätedose nach Anspruch 1 oder 2, **dadurch gekennzeichnet, dass** das Eingreifteil (30) mit einem Griffelement, insbesondere für eine menschliche Hand, versehen ist.

4. Unterflurgerätedose nach einem der vorstehenden Ansprüche, **dadurch gekennzeichnet, dass** Entkopplungsmittel vorgesehen sind, um das Eingreifteil (30) außer Eingriff mit der Gewindestange (26) zu bringen.

5. Unterflurgerätedose nach Anspruch 4, **dadurch gekennzeichnet, dass** das Eingreifteil (30) unterhalb einer im Wesentlichen parallel zur Gewindestange (26) verlaufenden Bohrung zum Einsetzen eines Entkopplungsstiftes (24) angeordnet ist.

6. Unterflurgerätedose nach Anspruch 5, **dadurch gekennzeichnet, dass** das Eingreifteil (30) mit einer ersten Anlaufschräge (86) versehen ist, die mit einem Ende des Entkopplungsstiftes (24) zusammenwirken kann.

7. Unterflurgerätedose nach Anspruch 4 oder 5, **dadurch gekennzeichnet, dass** die im Wesentlichen parallel zur Gewindestange (26) verlaufende Bohrung unterhalb des Eingreifteils (30) mit einer zweiten Anlaufschräge (88) versehen ist.

8. Unterflurgerätedose nach einem der vorstehenden Ansprüche, **dadurch gekennzeichnet, dass** ein Gewinde der Gewindestange (26) wenigstens auf einer Seite einen Flankenwinkel von 0° bis 5° oder weniger als 0° aufweist.

9. Unterflurgerätedose nach wenigstens einem der vorstehenden Ansprüche, **dadurch gekennzeichnet, dass** das Eingreifteil (30) in einer Führung am Gehäuseunterteil (12) angeordnet und mittels einer Feder (72) gegen die Gewindestange (26) vorgespannt ist.

10. Unterflurgerätedose nach einem der vorstehenden Ansprüche, **dadurch gekennzeichnet, dass** die Gewindestange (26) einen sich drehbar am Gehäuseoberteil (14) abstützenden Kopf (58) hat, wobei sich der Kopf (58) an einer lösbar am Gehäuseoberteil (14) befestigten Abstützplatte (38) abstützt.

11. Unterflurgerätedose nach Anspruch 10, **dadurch gekennzeichnet, dass** die Abstützplatte (38) mittels eines Bajonettverschlusses befestigt ist.

## Claims

1. Under-floor box for electric installations, comprising a housing base part to be placed onto a floor of a building and a housing upper part, wherein the housing upper part is supported against the housing base part by means of at least two threaded rods, and wherein means for height adjustment of the housing upper part relative to the housing base part by a turning move relative to the housing upper part along a pitch of the threaded rod are provided, and wherein the threaded rod (26) is received in a guiding device, **characterized in that** in the region of the guiding device is disposed an engagement part (30) which is displaceable radially in relation to the threaded rod (26) and provided with an internal thread (56) on the end facing the threaded rod (26).

2. Under-floor box according to claim 1, **characterized in that** the threaded rod (26) has a head (58) rotatably supported on the housing upper part (14), which head is provided with a coupling part for the application of a tool.

3. Under-floor box according to claim 1 or 2, **characterized in that** the engagement part (30) is provided with a handle element, in particular for a human hand.

4. Under-floor box according to any one of the preceding claims, **characterized in that** decoupling means are provided in order to disengage the engagement part (30) from the engagement on the threaded rod (26).

5. Under-floor box according to claim 4, **characterized in that** the engagement part (30) is arranged below a hole extending essentially in parallel to the threaded rod (26) for inserting a decoupling pin (24).

6. Under-floor box according to claim 5, **characterized in that** the engagement part (30) is provided with a first ramp surface (86) which is configured for cooperating with one end of the decoupling pin (24).

7. Under-floor box according to claim 4 or 5, **characterized in that** the hole extending essentially in parallel to the threaded rod (26) is provided with a second ramp surface (88) below the engagement part (30).

8. Under-floor box according to any one of the preceding claims, **characterized in that** a thread of the threaded rod (26) has a flank angle of 0° to 5° or less than 0° on at least one side.

9. Under-floor box according to any one of the preceding claims, **characterized in that** the engagement part (30) is arranged in a guiding device on the housing base part (12) and is preloaded against the threaded rod (26) by means of a spring (72).

10. Under-floor box according to any one of the preceding claims, **characterized in that** the threaded rod (26) has a head (58) rotatably supported on the housing upper part (14), wherein the head (58) takes support on a support plate (38) fixed detachably on the housing upper part (14).

11. Under-floor box according to claim 10, **characterized in that** the support plate (38) is fixed using a bayonet catch.

## Revendications

1. Boîte de jonction au sol pour installations électriques, comprenant une partie inférieure de boîtier pouvant être placée sur un sol de bâtiment et une partie supérieure de boîtier, la partie supérieure de boîtier étant supportée par rapport à la partie inférieure de boîtier au moyen d'au moins deux tiges filetées, et des moyens servant à régler la hauteur de la partie supérieure de boîtier par rapport à la partie inférieure de boîtier au moyen d'un mouvement de rotation par rapport à la partie supérieure de boîtier le long d'un filetage de la tige filetée étant prévus, et la tige filetée (26) étant reçue dans un guide, **caractérisée en ce qu'**une partie d'entrée en prise (30) déplaçable radialement par rapport à la tige filetée (26) est prévue dans la région du guide, laquelle partie d'entrée en prise est pourvue, à son extrémité tournée vers la tige filetée (26), d'un filetage intérieur (56).

2. Boîte de jonction au sol selon la revendication 1, **caractérisée en ce que** la tige filetée (26) a une tête (58) s'appuyant de manière rotative sur la partie supérieure de boîtier (14), laquelle tête est dotée d'une partie d'accouplement servant à appliquer un outil.

3. Boîte de jonction au sol selon la revendication 1 ou 2, **caractérisée en ce que** la partie d'entrée en prise (30) est dotée d'un élément de préhension, en particulier pour la main d'une personne.

4. Boîte de jonction au sol selon l'une quelconque des revendications précédentes, **caractérisée en ce que** des moyens de désaccouplement sont prévus, afin d'amener la partie d'entrée en prise (30) hors de prise avec la tige filetée (26).

5. Boîte de jonction au sol selon la revendication 4, **caractérisée en ce que** la partie d'entrée en prise (30) est disposée en dessous d'un alésage s'étendant sensiblement parallèlement à la tige filetée (26) et destiné à l'insertion d'une goupille de désaccouplement (24).

6. Boîte de jonction au sol selon la revendication 5, **caractérisée en ce que** la partie d'entrée en prise (30) est pourvue d'un premier biseau d'introduction (86) qui peut coopérer avec une extrémité de la goupille de désaccouplement (24).

7. Boîte de jonction au sol selon la revendication 4 ou 5, **caractérisée en ce que** l'alésage s'étendant sensiblement parallèlement à la tige filetée (26) est pourvu d'un deuxième biseau d'introduction (88) en dessous de la partie d'entrée en prise (30).

8. Boîte de jonction au sol selon l'une quelconque des revendications précédentes, **caractérisée en ce qu'**un filetage de la tige filetée (26) comprend, au moins sur un côté, un angle de flanc de 0° à 5° ou de moins de 0°.

9. Boîte de jonction au sol selon au moins l'une quelconque des revendications précédentes, **caractérisée en ce que** la partie d'entrée en prise (30) est disposée dans un guide sur la partie inférieure de boîtier (12) et est précontrainte contre la tige filetée (26) au moyen d'un ressort (72).

10. Boîte de jonction au sol selon l'une quelconque des revendications précédentes, **caractérisée en ce que** la tige filetée (26) a une tête (58) s'appuyant de manière rotative sur la partie supérieure de boîtier (14), la tête (58) s'appuyant sur une plaque d'appui (38) fixée de manière amovible à la partie supérieure de boîtier (14).

11. Boîte de jonction au sol selon la revendication 10, **caractérisée en ce que** la plaque d'appui (38) est fixée au moyen d'une fermeture à baïonnette.
